# EUROPÄISCHE PATENTSCHRIFT

(11) **EP 3 426 897 B1**
(45) Veröffentlichungstag und Bekanntmachung des Hinweises auf die Patenterteilung: **01.01.2020**
(21) Anmeldenummer: 17720398.1
(22) Anmeldetag: 20.04.2017
(51) Int. Cl.: F01K 23/16, F16D 23/10

(54) **VERFAHREN ZUM KUPPELN EINER DAMPFTURBINE UND EINER GASTURBINE MIT EINEM GEWÜNSCHTEN DIFFERENZWINKEL UNTER NUTZUNG EINER SOLLBESCHLEUNIGUNG**
METHOD FOR COUPLING A STEAM TURBINE AND A GAS TURBINE WITH A DESIRED DIFFERENCE ANGLE USING TARGET ACCELERATION
PROCEDE DE COUPLAGE D'UNE TURBINE A VAPEUR ET D'UNE TURBINE A GAZ AVEC REGLAGE DE L'ANGLE DIFFERENTIEL SOUHAITE A L'AIDE D'UNE ACCELERATION DE CONSIGNE

(30) Priorität: 18.05.2016 EP 16170145
(43) Veröffentlichungstag der Anmeldung: 16.01.2019
(73) Patentinhaber: Siemens Aktiengesellschaft, 80333 München (DE)
(72) Erfinder: BOROWSKI, Marc, 47445 Moers (DE); ZIMMER, Gerta, 45468 Mülheim an der Ruhr (DE)
(86) Internationale Anmeldenummer: PCT/EP2017/059405
(87) Internationale Veröffentlichungsnummer: WO 2017/198415

(56) Entgegenhaltungen:
- EP-A1- 2 910 742
- US-A1- 2015 059 347

## Beschreibung

In kombinierten Gas- und Dampfkraftwerken wird zunächst durch die Verbrennung von Gas die Gasturbine angetrieben. Mit der Abwärme der Gasturbine wird Dampf für eine Dampfturbine erzeugt. Beim Anfahren des Gas- und Dampfkraftwerks wird daher zuerst die Gasturbine betrieben. Die Dampfturbine kann erst zugeschaltet werden, wenn genügend Dampf bereitgestellt wird. Bei Einwellenanlagen sind Gasturbine und Generator fest auf einer Welle verbunden. Die Dampfturbine ist in der gleichen Achse angeordnet und kann über eine Kupplung angeschlossen werden. Es ist daher ein Kuppeln von Dampfturbine und Gasturbine erforderlich.

Der Kuppelwinkel ergibt sich in der Praxis dabei zufällig. Aus der EP 1 911 939 A1 ist es bekannt, den Kuppelwinkel gezielt auszuwählen. Damit ist es möglich einen Kuppelwinkel zu wählen, bei dem die Schwingungsbelastung minimiert ist. Grob gesprochen ist es damit möglich Unwuchten der beiden Turbinen in gewissem Umfang auszugleichen. Gerade im Vergleich zu einer Kupplung, bei der beide Turbinen so gekuppelt sind, dass sich Unwuchten addieren, kann damit eine Reduktion der Schwingungsbelastung erzielt werden. Trotz dieses Vorteils wird dieses Verfahren nicht eingesetzt.

Ein Verfahren zur gezielten Beschleunigung der Dampfturbine mit einem Beschleunigungswert, der aus der Solldrehzahldifferenz abgeleitet wird, die in Abhängigkeit von dem erfassten Differenzwinkel, der Beschleunigung und von einem gewünschten Zielkuppelwinkel gebildet wird ist aus der EP 2 813 675 A1, auch WO 2014/198649 A1, bekannt.

Aus der WO2015/124332 A1 ist ein Verfahren zum Kuppeln einer Dampfturbine und einer Gasturbine mit folgenden Schritten be kannt: 1) Beschleunigung der Dampfturbine bis zu einer Ausgangsdrehzahl, die unterhalb der Drehzahl der Gasturbine liegt; 2) Erfassen eines Differenzwinkels zwischen Gasturbine und Dampfturbine; 3) Beschleunigung der Dampfturbine mit einem Beschleunigungswert, der aus der Solldrehzahldifferenz abgeleitet wird, die in Abhängigkeit von dem erfassten Differenzwinkel, der Beschleunigung und von einem gewünschten Zielkuppelwinkel gebildet wird.

Aus der US 2015/059347 A1 ist ein Verfahren zum Kuppeln zweier Wellen, insbesondere einer Gasturbine und einer Dampfturbine, bekannt. Drehgeschwindigkeit und Drehwinkel der der ersten Welle werden erfasst, und die zweite Welle wird geregelt, indem die zweite Welle in eine Drehgeschwindigkeit relativ zu ersten Welle gebracht wird. Dabei wird die Beschleunigung der zweiten Welle so geregelt, dass Markierungen der zweiten Welle in einem vorgegeben Winkel zu den Markierungen der ersten Welle sind, sobald die zweite Welle auf die vorgegebene Rotationsgeschwindigkeit gebracht ist. Bei einer Geschwindigkeit knapp unterhalb der Synchrongeschwindigkeit wird gewartet bis der relative Winkel passt. Sodann wird die zweite Welle schnell und kurz beschleunigt und mit der ersten Welle gekuppelt.

Aufgabe der Erfindung ist es ein alternatives Verfahren zum Kuppeln mit einem gewünschten Kuppelwinkel bereitzustellen. Ebenso soll eine entsprechende Anordnung entwickelt werden.

Wenngleich sich die nachfolgend dargestellte Erfindung grundsätzlich zum Kuppeln von verschiedensten Dreheinrichtungen mit verschiedensten Welleneinrichtungen eignet, wird im Interesse einer anschaulichen Darstellung stets eine Dampfturbine als Beispiel für eine Dreheinrichtung und eine Gasturbine als Beispiel für eine Welleneinrichtung gewählt. Dabei handelt es sich um die aus derzeitiger Sicht wichtigste Anwendung der Erfindung. Weitere Anwendungen sind aber ausdrücklich denkbar. So können etwa verschiedene Teilturbinen gekoppelt werden. Dies ist in Anlagen erforderlich, bei denen ein Teil der Turbine bei Schwachlast nicht betrieben wird und nur bei erhöhter Leistungsanforderung zugefahren wird.

Es wurde erkannt, dass ein Verfahren zum Kuppeln einer Dampfturbine und einer Gasturbine, mit folgenden Schritten bereitzustellen ist:
Erfassen eines Differenzwinkels zwischen Gasturbine und Dampfturbine;
Erfassen einer Drehzahldifferenz zwischen Gasturbine und Dampfturbine;
Vorhersage eines Kuppelwinkels, mit dem Dampfturbine und Gasturbine gekuppelt würden, wenn die Dampfturbine mit einer bekannten Beschleunigung bis zum Beginn des Einkuppelns beschleunigt würde;

Vergleich des vorhergesagten Kuppelwinkels mit einem Zielkuppelwinkel und daraus Berechnung einer Sollbeschleunigung derart, dass der vorhergesagte Kuppelwinkel mit dem Zielkuppelwinkel übereinstimmt.

Es genügt messtechnisch die Erfassung von Differenzwinkel und Differenzgeschwindigkeit zwischen Gasturbine und Dampfturbine vorzunehmen. Die Vorhersage des Kuppelwinkels der sich ergeben würde, kann rechnerisch erfolgen.

Durch den Vergleich des vorhergesagten Kuppelwinkels mit dem Zielkuppelwinkel kann in einfacher Weise eine Sollbeschleunigung berechnet werden, derart, dass der vorhergesagte Kuppelwinkel mit dem Zielkuppelwinkel übereinstimmt.

Zu beachten ist, dass die zur Vorhersage genutzte bekannte Beschleunigung kein gemessener Wert sein muss. Es ist also nicht erforderlich die Beschleunigung der Dampfturbine zu messen.

In einer Ausführungsform wird bei der Vorhersage unterstellt, dass der Beginn des Einkuppelns erfolgt, sobald die Drehzahl der Dampfturbine die Drehzahl der Gasturbine erreicht oder um einen gewählten Wert übersteigt. Damit können die Verhältnisse bei einer Selbstsynchronisierenden Schaltkupplung wiedergegeben werden. Derartige Kupplungen sind mechanisch so aufgebaut, dass sobald die Drehzahl der Dampfturbine geringfügig höher ist als die Drehzahl der Gasturbine die Kupplung erfolgt. Wird also eine Selbstsynchronisierende Schaltkupplung genutzt, beginnt automatisch bei einer bestimmten, sehr niedrigen, Drehzahldifferenz das Einkuppeln. Daher ist es günstig eben dies bei der Vorhersage zu unterstellen.

In einer Ausführungsform dient als Wert für die bekannte Beschleunigung die errechnete Sollbeschleunigung. Wie schon erwähnt ist eine Messung der bekannten Beschleunigung nicht erforderlich. Im Regelfall lassen sich sehr gute Resultate erzielen wenn für die bekannte Beschleunigung der als Sollbeschleunigung errechnete Wert gewählt wird

In einer Ausführungsform wird die Dampfturbine bis zu einer Ausgangsdrehzahl, die bevorzugt unterhalb der Drehzahl der Gasturbine liegt, mit einer gewählten Beschleunigung unabhängig vom angestrebten Zielkuppelwinkel beschleunigt. Damit kann die Beschleunigung bis dahin einfach erreicht werden ohne an dem im Stand der Technik üblichen Verfahren etwas ändern zu müssen.

In einer Ausführungsform ist die gewählte Beschleunigung konstant. Es ist oft sinnvoll bis zur Ausgangsdrehzahl weitgehend konstant zu beschleunigen.

In einer Ausführungsform wird die Vorhersage des Kuppelwinkels bei Erreichen der Ausgangsdrehzahl mit der gewählten Beschleunigung begonnen. Wie dargelegt ist es nicht erforderlich die bekannte Beschleunigung, die zur Vorhersage des Kuppelwinkels genutzt wird, messtechnisch zu erfassen. Vielmehr wird oft mit der errechneten Sollbeschleunigung gearbeitet. Zu Beginn der Vorhersage ist dafür allerdings noch kein Wert vorhanden, es sei denn dieser würde gesetzt. Sofern, wie in den vorstehenden Ausführungsformen, zu Beginn der Vorhersage des Kuppelwinkels die Dampfturbine mit der gewählten Beschleunigung - oft einer konstanten Beschleunigung - beschleunigt wird, ist es sinnvoll, dass die gewählte Beschleunigung als bekannte Beschleunigung dient. Es bleibt dabei hinzunehmen, dass die gewählte Beschleunigung oft ein Sollwert ist und es nicht gesichert ist, dass die Dampfturbine tatsächlich mit der gewählten Beschleunigung beschleunigt wird. Die Abweichungen sind aber gering genug, so dass das Verfahren dennoch funktioniert.

In einer Ausführungsform liegt die Ausgangsdrehzahl etwa 0,5 Hz bis etwa 1,5 Hz unterhalb der Drehzahl der Welleneinrichtung, bevorzugt etwa 0,9 Hz bis etwa 1,1 Hz. Es hat sich gezeigt, dass mit diesen Werten einerseits zügig bis zur Ausgangsdrehzahl beschleunigt werden kann und andererseits ein zügiges und zielgerichtetes Kuppeln mit einem gewünschten Differenzwinkel möglich ist.

In einer Ausführungsform wird bei der Berechnung der Sollbeschleunigung beachtet, dass beim Einkuppeln der Differenzwinkel um einen Kupplungsverdrehwinkel verändert wird. Der Kupplungsverdrehwinkel ergibt sich beim Einkuppeln aus mechanischen Gründen, die hier nicht näher ausgeführt werden. Vorliegend genügt es zu wissen, dass der Kupplungsverdrehwinkel auftritt und von der jeweiligen Kupplung abhängt. Im Übrigen ist der Kupplungsverdrehwinkel konstant und kann daher bei der Berechnung problemlos berücksichtigt werden.

In einer Ausführungsform wird die Sollbeschleunigung in eine Solldrehzahl gewandelt, die an eine Turbinensteuereinheit übergeben wird. Durch geeignete Integration der Sollbeschleunigung wird die Solldrehzahl erhalten.

An dieser Stelle soll kurz auf die Turbinensteuereinheit eingegangen werden. Die Turbinensteuereinheit regelt über die Stellung eines Ventils, welches die Dampfzufuhr zur Dampfturbine einstellt, die Geschwindigkeit der Turbine. Die verbreiteten Turbinensteuereinheiten benötigen als Eingangssignal eine Solldrehzahl. Davon abhängig sorgt die Turbinensteuereinheit für eine Beschleunigung der Turbine. Durch die Übergabe der Solldrehzahl wird also wie gewünscht die Sollbeschleunigung bewirkt. Der Weg, wenn man so will Umweg, aus der Sollbeschleunigung zunächst eine Solldrehzahl zu ermitteln, ist lediglich dem Umstand geschuldet übliche Turbinensteuereinheiten verwenden zu können.

Die Erfindung betrifft auch eine entsprechende Anordnung. Die Anordnung ist in einer Ausführungsform ausgebildet, das oben beschriebene Verfahren durchzuführen. Zur Vermeidung von Wiederholungen wird hinsichtlich der Anordnung auf die obigen Ausführungen zum Verfahren verwiesen. Im Allgemeinen genügt es die Programmierung entsprechend anzupassen.

In einer Ausführungsform der Anordnung kann die Erfassung des Differenzwinkels mit einer Taktung von etwa 4 ms bis etwa 20 ms oder niedriger bestimmt werden. Dabei handelt es sich um eine Modifikation bekannter Anordnungen, die zur Durchführung des oben beschriebenen Verfahrens sehr hilfreich ist. Damit kann der Differenzwinkel besser bestimmt werden.

Die Erfindung soll unter Nutzung von Figuren nachfolgend anhand eines Ausführungsbeispiels näher erläutert werden.

Dabei zeigen
- Fig. 1: eine Einwellenanlage eines Gas- und Dampfkraftwerks
- Fig. 2: den Ablauf der Vorhersage des Kuppelwinkels und die Regelung der Sollbeschleunigung
- Fig. 3: die Regelung der Sollbeschleunigung und das Zusammenwirken mit einer Turbinensteuereinheit
- Fig. 4: eine Simulation des gemessenen Differenzwinkels und des vorhegesagten Kuppelwinkels
- Fig. 5: eine Simulation der geregelten Beschleunigung

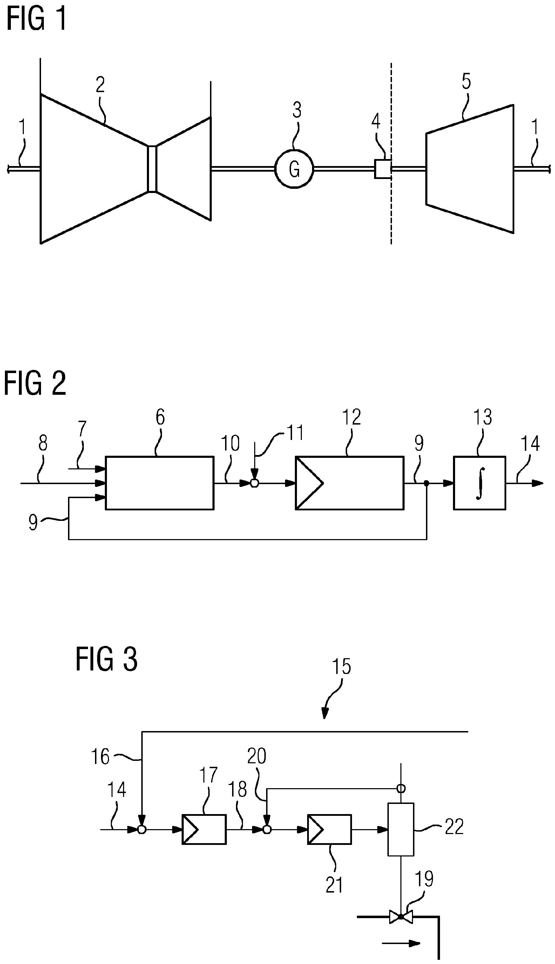

In Figur 1 sind die für die vorliegende Erfindung wesentlichen Komponenten eines kombinierten Gas- und Dampfkraftwerks gezeigt. Als wesentliches Merkmal ist die Welle 1 zu erkennen. An dieser ist eine Gasturbine 2 befestigt, die sich mit der Welle 1 dreht. Ferner ist ein von der Gasturbine 2 angetriebener Generator 3 zu erkennen.

Die Welle 1 wird von einer Kupplung 4 unterbrochen. Die Kupplung 4 ist als selbstsynchronisierende Schaltkupplung ausgeführt.

Im sich an die Kupplung 4 anschließenden Teil der Welle 1 befindet sich die Dampfturbine 5. Die Kupplung 3 hat also die Aufgabe die Dampfturbine 5 mit der Gasturbine 2 zu kuppeln. Dabei ist klar, dass es sich im Grunde um eine Kupplung der jeweiligen Wellenteile der Welle 1 handelt. Da diese aber fest mit der Gasturbine beziehungsweise der Dampfturbine verbunden sind, ist es sowohl sachlich richtig wie auch einer anschaulichen Darstellung geschuldet von einer Kupplung der Dampfturbine 5 mit der Gasturbine 2 zu sprechen.

Figur 2 zeigt den Ablauf der Vorhersage des Kuppelwinkels und die Regelung der Sollbeschleunigung auf. In ein Vorhersagemodul 6 fließen ein erfasster Differenzwinkel 7 zwischen Gasturbine 2 und Dampfturbine 5 ein sowie eine erfasste Differenzgeschwindigkeit 8 zwischen Gasturbine 2 und Dampfturbine 5. Ferner fließt eine Sollbeschleunigung 9 ein, auf die nachfolgend zurückgekommen wird.

Aus dem Differenzwinkel 7, der Differenzgeschwindigkeit 8 und der Sollbeschleunigung 9 wird im Vorhersagemodul 6 ein Kuppelwinkel 10 ermittelt, der sich ergeben würde, wenn mit der Sollbeschleunigung 9 die Dampfturbine 5 beschleunigt würde, bis die Kupplung 4 mit dem Einkuppeln beginnt. Dabei ist zu beachten, dass die Kupplung 4 aufgrund ihrer Ausführung als selbstsynchronisierende Schaltkupplung bauartbedingt mit dem Einkuppeln beginnt, sobald die Drehzahl der Dampfturbine 5 die Drehzahl der Gasturbine 2 geringfügig übersteigt.

Der sich aus der Vorhersage ergebende vorhergesagte Kuppelwinkel 10 wird mit einem vorgegebenen Zielkuppelwinkel 11 verglichen. Aus der Differenz vom vorhergesagten Kuppelwinkel 10 zum Zielkuppelwinkel 11 wird im Beschleunigungsmodul 12 die Sollbeschleunigung 9 ermittelt. Wie bereits erwähnt wird diese Sollbeschleunigung 9 das Vorhersagemodul 6 übergeben. Darüber hinaus wird die Sollbeschleunigung 9 an einen Integrator 13 übergeben. Im Integrator 13 wird aus der Sollbeschleunigung 9 durch eine Integration der Sollbeschleunigung 9 über die Zeit bis zum Beginn des Einkuppelns eine Solldrehzahl 14 der Dampfturbine ermittelt.

Die Solldrehzahl 14 wird, wie in Fig. 3 ersichtlich, an eine Turbinensteuereinheit 15 übergeben. Derartige Turbinensteuereinheiten sind aus dem Stand der Technik bekannt. Aus Gründen der Vollständigkeit dennoch eine kurze Darstellung der Turbinensteuereinheit 15. Die Turbinensteuereinheit kann die Solldrehzahl 14 empfangen und mit einer gemessenen Dampfturbinendrehzahl 16 vergleichen. Im Geschwindigkeitsmodul 17 wird aus dem Vergleich der Solldrehzahl 14 mit der Dampfturbinendrehzahl 16 eine Sollstellung 18 eines Dampfturbinenventils 19 ermittelt.

Die Sollstellung 18 wird mit der erfassten Dampfturbinenventilstellung 20 verglichen. Davon ausgehend wird von einem Stellungsmodul 21 ermittelt, wie eine Verstelleinheit 22 das Dampfturbinenventil 19 einstellt.

Obige Darstellung macht ersichtlich, dass das neue Verfahren zum Kuppeln unter Nutzung einer Sollbeschleunigung sich leicht in vorhandene Steuerkonzepte integrieren lässt.

Die Darstellung ist als abstrakte Darstellung der Schritte anzusehen. Die Aussage ein Schritt erfolge in einem Modul und ein weiterer Schritt in einem anderen Modul bedeutet nicht, dass es sich bei den Modulen zwingend um unterschiedliche Bauteile handeln muss. So kann vieles auf einer gemeinsamen Rechnereinheit ausgeführt werden. Es geht vielmehr um den logischen Ablauf der Schritte.

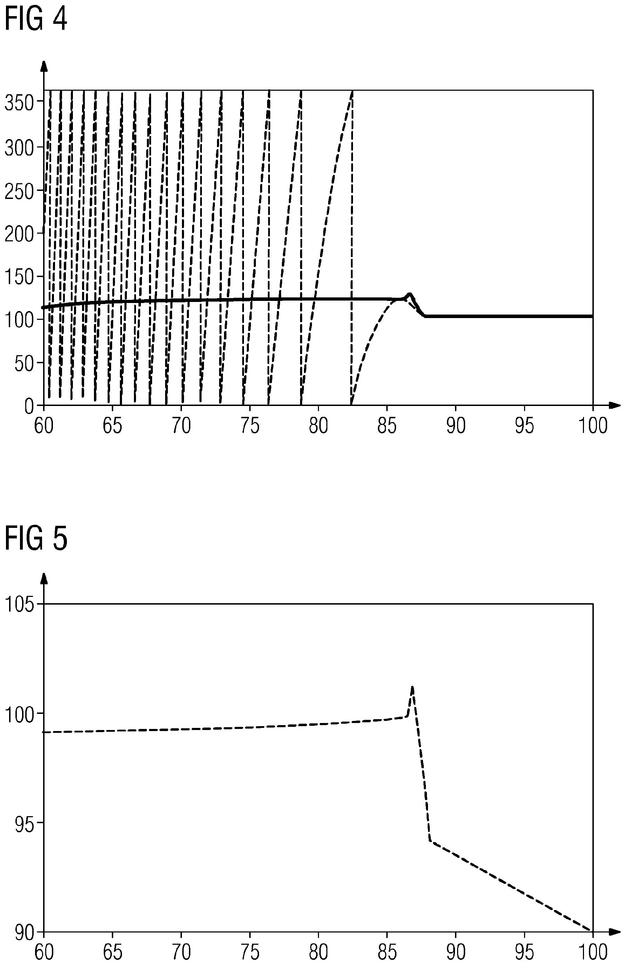

In Figur 4 ist der zeitliche Verlauf des erfassten Differenzwinkels und des vorhergesagten Kuppelwinkels dargestellt. Auf der Rechtswertache ist die Zeit in Sekunden aufgetragen und auf der Hochwertachse der Winkel in Grad. Den Verlauf des erfassten Differenzwinkels zeigt die gestrichelte Linie und den vorhegesagten Kuppelwinkel die durchgezogene Linie.

In Figur 5 ist eine Simulation der geregelten Beschleunigung über der Zeit aufgetragen. Auf der Rechtswertachse ist die Zeit in Sekunden aufgetragen. Auf der Hochwertachse ist die Beschleunigung in Prozent zu einem willkürlichen Beschleunigungswert aufgetragen. Der starke Abfall zwischen 85 s und 90 s ist dem Einkuppeln geschuldet. Der weitere Verlauf der Kurve ist nicht mehr maßgeblich. Nach dem Einkuppeln haben Dampfturbine 5 und Gasturbine 2 naturgemäß die selbe Geschwindigkeit.

## Patentansprüche

1. Verfahren zum Kuppeln einer Dreheinrichtung, insbesondere einer Dampfturbine (5),
und einer Welleneinrichtung,
insbesondere einer Gasturbine (2),
mit folgenden Schritten:
- Erfassen eines Differenzwinkels (7) zwischen Welleneinrichtung (2) und Dreheinrichtung (5);
- Erfassen einer Differenzgeschwindigkeit (8) zwischen Welleneinrichtung (2) und Dreheinrichtung (5);
**gekennzeichnet, durch** folgende Schritte:
- Vorhersage eines Kuppelwinkels, mit dem Dreheinrichtung (5) und Welleneinrichtung (2) gekuppelt würden, wenn die Dreheinrichtung (5) mit einer bekannten Beschleunigung bis zum Beginn des Einkuppelns beschleunigt würde;
- Vergleich des vorhergesagten Kuppelwinkels (10) mit einem Zielkuppelwinkel (11) und daraus Berechnung einer Sollbeschleunigung (9) derart, dass der vorhergesagte Kuppelwinkel (10) mit dem Zielkuppelwinkel (11) übereinstimmt.

2. Verfahren nach Anspruch 1,
**dadurch gekennzeichnet, dass**
bei der Vorhersage unterstellt wird, dass der Beginn des Einkuppelns erfolgt, sobald die Drehzahl der Dreheinrichtung (5) die Drehzahl der Welleneinrichtung (2) erreicht oder um einen gewählten Wert übersteigt.

3. Verfahren nach einem der vorhergehenden Ansprüche,
**dadurch gekennzeichnet, dass**
als Wert für die bekannte Beschleunigung die errechnete Sollbeschleunigung (9) dient.

4. Verfahren nach einem der vorhergehenden Ansprüche,
**dadurch gekennzeichnet, dass**
die Dreheinrichtung (5) bis zu einer Ausgangsdrehzahl, die bevorzugt unterhalb der Drehzahl der Welleneinrichtung (2) liegt, mit einer gewählten Beschleunigung unabhängig vom angestrebten Zielkuppelwinkel (11) beschleunigt wird.

5. Verfahren nach dem vorhergehenden Anspruch,
**dadurch gekennzeichnet, dass**
die gewählte Beschleunigung konstant ist.

6. Verfahren nach einem der Ansprüche 3 bis 5,
**dadurch gekennzeichnet, dass**
die Vorhersage des Kuppelwinkels bei Erreichen der Ausgangsdrehzahl mit der gewählten Beschleunigung begonnen wird.

7. Verfahren nach einem der Ansprüche 3 bis 6,
**dadurch gekennzeichnet, dass**
die Ausgangsdrehzahl etwa 0,5 Hz bis etwa 1,5 Hz unterhalb der Drehzahl der Welleneinrichtung (2) liegt, bevorzugt etwa 0,9 Hz bis etwa 1,1 Hz.

8. Verfahren nach einem der vorhergehenden Ansprüche,
**dadurch gekennzeichnet, dass**
bei der Berechnung der Sollbeschleunigung (9) beachtet wird, dass beim Einkuppeln der Differenzwinkel um einen Kupplungsverdrehwinkel verändert wird.

9. Verfahren nach einem der vorgehenden Ansprüche,
**dadurch gekennzeichnet, dass**
die Sollbeschleunigung (9) in eine Solldrehzahl (14) gewandelt wird, die an eine Turbinensteuereinheit (15) übergeben wird.

10. Anordnung mit einer Welleneinrichtung,
insbesondere einer Gasturbine (2),
und einer Dreheinrichtung,
insbesondere einer Dampfturbine (5),
mit einer Kupplung (4) zum Kuppeln von Welleneinrichtung (2) und Dreheinrichtung (5), aufweisend:
eine Einrichtung zum Erfassen des Differenzwinkels (7) zwischen Welleneinrichtung (2) und Dreheinrichtung (5);
eine Einrichtung zum Erfassen der Differenzgeschwindigkeit (8) zwischen Welleneinrichtung (2) und Dreheinrichtung (5);
eine Einrichtung (19) zum Beschleunigen der Dreheinrichtung(5) mit einem Beschleunigungswert;
**dadurch gekennzeichnet, dass**
Mittel (6) zur Vorhersage aus dem erfassten Differenzwinkel (7), der erfassten Differenzgeschwindigkeit (8) und einer bekannten Beschleunigung einen Kuppelwinkel (10) vorherzusagen, der sich ergeben würde, wenn die Dreheinrichtung (5) mit der bekannten Beschleunigung bis zum Beginn des Einkuppelns beschleunigt würde;
und Mittel (12), die den vorhergesagten Kuppelwinkel (10) mit einem Zielkuppelwinkel (11) vergleichen und daraus eine Sollbeschleunigung (9) derart, dass der vorhergesagte Kuppelwinkel (10) mit dem Zielkuppelwinkel (11) übereinstimmt, berechnen können, vorhanden sind.

11. Anordnung nach dem vorhergehenden Anspruch,
**dadurch gekennzeichnet, dass**
die Anordnung zur Durchführung eines Verfahrens nach einem der Ansprüche 1 bis 9 ausgebildet ist.

12. Anordnung nach einem der Ansprüche 10 oder 11,
**dadurch gekennzeichnet, dass**
die Erfassung des Differenzwinkels (7) mit einer Taktung von etwa 4 ms bis etwa 20 ms oder niedriger bestimmt werden kann.

## Claims

1. Method for coupling a rotating device, in particular a steam turbine (5), and a shaft device, in particular a gas turbine (2),
having the following steps:
- Detecting a differential angle (7) between the shaft device (2) and rotating device (5);
- Detecting a differential speed (8) between the shaft device (2) and rotating device (5);
**characterized by** the following steps:
- Predicting a coupling angle at which the rotating device (5) and shaft device (2) would be coupled if the rotating device (5) were accelerated with a known acceleration up to the start of the coupling process;
- Comparing the predicted coupling angle (10) with a target coupling angle (11) and calculating therefrom a setpoint acceleration (9) in such a way that the predicted coupling angle (10) corresponds to the target coupling angle (11).

2. Method according to Claim 1,
**characterized in that**
the prediction is based on the assumption that the start of the coupling process takes place as soon as the rotational speed of the rotating device (5) reaches the rotational speed of the shaft device (2) or exceeds it by a selected value.

3. Method according to one of the preceding claims,
**characterized in that**
the calculated setpoint acceleration (9) serves as a value for the known acceleration.

4. Method according to one of the preceding claims,
**characterized in that**
the rotating device (5) is accelerated up to an output rotational speed which is preferably below the rotational speed of the shaft device (2), with a selected acceleration independently of the aimed-at target coupling angle (11).

5. Method according to the preceding claim,
**characterized in that**
the selected acceleration is constant.

6. Method according to one of Claims 3 to 5,
**characterized in that**
the prediction of the coupling angle is started when the output rotational speed is reached with the selected acceleration.

7. Method according to one of Claims 3 to 6,
**characterized in that**
the output rotational speed is approximately 0.5 Hz up to approximately 1.5 Hz below the rotational speed of the shaft device (2), preferably approximately 0.9 Hz to approximately 1.1 Hz.

8. Method according to one of the preceding claims,
**characterized in that**
during the calculation of the setpoint acceleration (9) it is noted that during the coupling process the differential angle is changed by a coupling rotational angle.

9. Method according to one of the preceding claims,
**characterized in that**
the setpoint acceleration (9) is converted into a setpoint rotational speed (14) which is transferred to a turbine control unit (15).

10. Arrangement having a shaft device, in particular a gas turbine (2), and a rotating device, in particular a steam turbine (5), having a clutch (4) for coupling the shaft device (2) and rotating device (5), having:
a device for detecting the differential angle (7) between the shaft device (2) and rotating device (5);
a device for detecting the differential speed (8) between the shaft device (2) and rotating device (5) ;
a device (19) for accelerating the rotating device (5) with an acceleration value;
**characterized in that**
means (6) for predicting, from the detected differential angle (7), the detected differential speed (8) and a known acceleration, a coupling angle (10) which would occur if the rotating device (5) were accelerated with the known acceleration up to the start of the coupling;
and means (12) which compare the predicted coupling angle (10) with a target coupling angle (11) and can calculate therefrom a setpoint acceleration (9) such that the predicted coupling angle (10) corresponds to the target coupling angle are present.

11. Arrangement according to the preceding claim,
**characterized in that**
the arrangement is designed to carry out a method according to one of Claims 1 to 9.

12. Arrangement according to one of Claims 10 or 11,
**characterized in that**
the detection of the differential angle (7) can be determined with a clock rate of approximately 4 ms up to approximately 20 ms or lower.

## Revendications

1. Procédé de couplage d'un dispositif tournant,
notamment d'une turbine (5) à vapeur,
et d'un dispositif à arbre,
notamment d'une turbine (2) à gaz,
comprenant les stades suivants :
- détection d'un angle (7) de différence entre le dispositif (2) à arbre et le dispositif (5) tournant ;
- détection d'une vitesse (8) de différence entre le dispositif (2) à arbre et le dispositif (5) tournant ;
**caractérisé par** les stades suivants :
- prédiction d'un angle de couplage, par lequel le dispositif (5) tournant et le dispositif (2) à arbre auraient été couplés, si le dispositif (5) tournant avait été accéléré à une accélération connue jusqu'au début du couplage ;
- comparaison de l'angle (10) de couplage prédit à un angle (11) de couplage cible et calcul à partir de cela d'une accélération (9) de consigne, de manière à ce que l'angle (10) de couplage prédit coïncide avec l'angle (11) de couplage cible.

2. Procédé suivant la revendication 1,
**caractérisé en ce que**
on suppose dans la prédiction que le début du couplage s'effectue dès que la vitesse de rotation du dispositif (5) tournant atteint la vitesse de rotation du dispositif (2) à arbre ou la dépasse d'une valeur choisie.

3. Procédé suivant l'une des revendications précédentes,
**caractérisé en ce que**
l'accélération (9) de consigne calculée sert de valeur de l'accélération connue.

4. Procédé suivant l'une des revendications précédentes,
**caractérisé en ce que**
l'on accélère, à une accélération choisie indépendamment de l'angle (11) de couplage cible visé, le dispositif (5) de rotation jusqu'à une vitesse de rotation de fin, qui, de préférence, est inférieure à la vitesse de rotation du dispositif (2) à arbre.

5. Procédé suivant l'une des revendications précédentes,
**caractérisé en ce que**
l'accélération choisie est constante.

6. Procédé suivant l'une des revendications 3 à 5,
**caractérisé en ce que**
l'on commence à effectuer la prédiction de l'angle de couplage, lorsque la vitesse de rotation de fin à l'accélération choisie est atteinte.

7. Procédé suivant l'une des revendications 3 à 6,
**caractérisé en ce que**
la vitesse de rotation de fin est inférieure d'environ 0,5 Hz à environ 1,5 Hz à la vitesse de rotation du dispositif (2) à arbre, en étant, de préférence, inférieure de 0,9 Hz à environ 1,1 Hz.

8. Procédé suivant l'une des revendications précédentes,
**caractérisé en ce que**
dans le calcul de l'accélération (9) de consigne, on tient compte que, lors du couplage, l'angle de différence est modifié d'un angle de torsion de couplage.

9. Procédé suivant l'une des revendications précédentes,
**caractérisé en ce que**
l'on transforme l'accélération (9) de consigne en une vitesse (14) de rotation de consigne, qui est transmise à l'unité (15) de commande de la turbine.

10. Agencement comprenant un dispositif à arbre,
notamment une turbine (2) à gaz,
et un dispositif tournant,
notamment une turbine (5) à vapeur,
comprenant un couplage (4) pour coupler le dispositif (2) à arbre et le dispositif (5) tournant, comportant :
un dispositif de détection de l'angle (7) de différence entre le dispositif (2) à arbre et le dispositif (5) tournant ;
un dispositif de détection de la vitesse (8) de différence entre le dispositif (2) à arbre et le dispositif (5) tournant ;
un dispositif (19)d'accélération du dispositif (5) tournant à une valeur d'accélération ;
**caractérisé en ce que**
il y a des moyens (6) de prédiction, à partir de l'angle (7) de différence détecté, de la vitesse (8) de différence détectée et d'une accélération connue, d'un angle (10) de couplage, qui se serait produit, si le dispositif (5) tournant avait été accéléré à l'accélération connue jusqu'au début du couplage ;
et des moyens (12), qui comparent l'angle (10) de couplage prédit à un angle (11) de couplage cible et qui peuvent, à partir de cela, calculer une accélération (5) de consigne, de manière à ce que l'angle (10) de couplage prédit coïncide avec l'angle (11) de couplage cible.

11. Agencement suivant la revendication précédente,
**caractérisé en ce que** l'agencement est constitué pour effectuer un procédé suivant l'une des revendications 1 à 9.

12. Agencement suivant l'une des revendications 10 ou 11,
**caractérisé en ce que**
la détection de l'angle (7) de différence peut être déterminée à une cadence d'environ 4 ms à environ 20 ms ou plus basse.
